# EUROPEAN PATENT SPECIFICATION

(11) **EP 3 047 955 B1**
(45) Date of publication and mention of the grant of the patent: **12.04.2017**
(21) Application number: 16151849.3
(22) Date of filing: 19.01.2016
(51) Int. Cl.: B29C 45/76, B29C 45/80, B29C 45/82, B29C 45/17

(54) **INJECTION MOLDING MACHINE**
SPRITZGIESSMASCHINE
MACHINE DE MOULAGE À INJECTION

(30) Priority: 23.01.2015 JP 2015011701
(43) Date of publication of application: 27.07.2016
(73) Proprietor: SUMITOMO HEAVY INDUSTRIES, LTD., Tokyo 141-6025 (JP)
(72) Inventor: YAMAGUCHI, Hiroshi, Chiba, 263-0001 (JP)
(74) Representative: Louis Pöhlau Lohrentz

(56) References cited:
- EP-A1- 1 514 663
- EP-A1- 2 633 969
- JP-A- 2006 062 244
- JP-A- 2006 062 245

## Description

### Field of the Invention

### Description of Related Art

The present invention relates to an injection molding machine.

An injection molding machine has an injection unit which includes a nozzle that injects a molding material into a mold unit, a moving unit which advances and retracts the injection unit with respect to the mold unit, a controller which controls the moving unit, and the like (refer to, for example, Japanese Unexamined Patent Application Publication No. 2006-62244). The moving unit presses the nozzle of the injection unit against the mold unit, thereby preventing the leakage of the molding material from between the nozzle and the mold unit. A pressure which presses the nozzle of the injection unit against the mold unit is called a nozzle contact pressure.

In the past, an injection molding machine in which it is possible to support the adjustment of setting of the injection molding machine has been required.

### SUMMARY OF THE INVENTION

The present invention has been made in view of the above problem and has a main object to provide an injection molding machine in which it is possible to support the adjustment of setting of the injection molding machine.

In order to solve the above problem, according to an aspect of the present invention, there is provided an injection molding machine including: an injection unit which includes a nozzle that is pressed against a mold unit and injects a molding material into the mold unit, a cylinder in which the nozzle is provided at a front end portion, and an injection member which can advance and retract in the cylinder; a moving unit which advances and retracts the injection unit with respect to the mold unit and generates a nozzle contact pressure which presses the nozzle against the mold unit; and a monitoring unit which monitors at least one position of a most advanced position of the injection member during a hold pressure process and a position of the injection member at the time of completion of the hold pressure process and performs a change of setting of the nozzle contact pressure, based on variation between shots at the monitoring position.

According to the aspect of the present invention, an injection molding machine is provided in which it is possible to support the adjustment of setting of the injection molding machine.

### BRIEF DESCRIPTION OF THE DRAWINGS

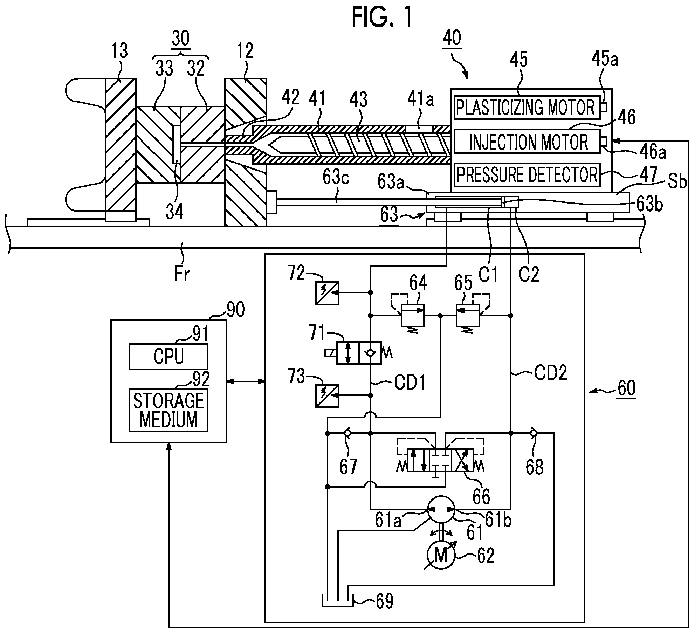

Fig. 1 is a diagram showing an injection molding machine according to an embodiment of the present invention.

### DETAILED DESCRIPTION OF THE INVENTION

Hereinafter, a mode for carrying out the present invention will be described with reference to the drawing.

Fig. 1 is a diagram showing an injection molding machine according to an embodiment of the present invention. The injection molding machine shown in Fig. 1 has a frame Fr, an injection unit 40, a moving unit 60, a controller 90, and the like.

The injection unit 40 is installed on a slide base Sb capable of advancing and retracting with respect to the frame Fr and is made so as to be able to advance and retract with respect to a mold unit 30. The injection unit 40 comes into contact with the mold unit 30 and fills the mold unit 30 with a molding material.

The mold unit 30 is configured with a stationary mold 32 and a movable mold 33. The stationary mold 32 is mounted on a stationary platen 12, and the movable mold 33 is mounted on a movable platen 13. The movable platen 13 advances and retracts with respect to the stationary platen 12, whereby the mold closing, the mold clamping, and the mold opening of the mold unit 30 are performed. A cavity 34 is formed between the stationary mold 32 and the movable mold in a mold clamping state. Amolding product is obtained by solidifying the molding material filled into the cavity 34. Thereafter, the mold opening of the mold unit 30 is performed and the molding product is pushed out from the mold unit 30.

The injection unit 40 has, for example, a cylinder 41, a nozzle 42, a screw 43 as an injection member, a plasticizing motor 45, an injection motor 46 as a drive source, and a pressure detector 47. Hereinafter, a direction of movement (the leftward direction in Fig. 1) of the screw 43 when performing filling will be described as being forward and a direction of movement (the rightward direction in Fig. 1) of the screw 43 when performing plasticizing as being backward.

The cylinder 41 heats the molding material fed from a feed port 41a. The feed port 41a is formed in a rear portion of the cylinder 41. A heat source such as a heater is provided in the outer periphery of the cylinder 41.

The nozzle 42 is provided at a front end portion of the cylinder 41 and pressed against the mold unit 30.

The screw 43 is disposed so as to be rotatable and be able to advance and retract in the cylinder 41.

The plasticizing motor 45 rotates the screw 43, thereby sending the molding material forward along a helical groove of the screw 43. The molding material is gradually melted by heat from the cylinder 41 while being sent forward. The screw 43 retracts as a liquid molding material is sent to the front of the screw 43 and accumulated in a front portion of the cylinder 41.

The injection motor 46 is a driving unit which advances and retracts the screw 43. The injection motor 46 advances the screw 43, thereby making the cavity 34 of the mold unit 30 be filled with the liquid molding material accumulated in front of the screw 43. Thereafter, the injection motor 46 presses the screw 43 forward, thereby applying a pressure to the molding material in the cavity 34. A molding material can be replenished when there is a shortage thereof. A motion conversion mechanism for converting the rotation motion of the injection motor 46 into the linear motion of the screw 43 is provided between the injection motor 46 and the screw 43.

The pressure detector 47 is disposed, for example, between the injection motor 46 and the screw 43 and detects a pressure which the screw 43 receives from the molding material, a back pressure against the screw 43, or the like. The pressure which the screw 43 receives from the molding material corresponds to a pressure acting on the molding material from the screw 43.

An operation of the injection unit 40 is controlled by the controller 90. The controller 90 controls a filling process, a hold pressure process, a plasticizing process, and the like.

In the filling process, the injection motor 46 is driven, thereby advancing the screw 43 at a set speed and thus making the mold unit 30 be filled with the liquid molding material accumulated in front of the screw 43. The position or the speed of the screw 43 is detected by, for example, an encoder 46a of the injection motor 46. If the position of the screw 43 reaches a predetermined position, switching (so-called V/P switching) from the filling process to the hold pressure process is performed.

In addition, a configuration may be made in which after the position of the screw 43 reaches a predetermined position in the filling process, the screw 43 is temporarily stopped at the predetermined position and thereafter, the V/P switching is performed. Immediately before the V/P switching, instead of stopping of the screw 43, very slow speed advance or very slow speed retraction of the screw 43 may be performed.

In the hold pressure process, the injection motor 46 is driven, thereby pressing the screw 43 forward at a set pressure and thus applying a pressure to the molding material in the mold unit 30. A molding material can be replenished when there is a shortage thereof. The pressure of the molding material is detected by, for example, the pressure detector 47. After the hold pressure process, a cooling process is started. In the cooling process, solidification of the molding material in the cavity 34 is performed. The plasticizing process maybe performed during the cooling process.

In the plasticizing process, the plasticizing motor 45 is driven, thereby rotating the screw 43 at a set rotational frequency and thus sending the molding material forward along the helical groove of the screw 43. Accordingly, the molding material is gradually melted. The screw 43 retracts as a liquid molding material is sent to the front of the screw 43 and accumulated in the front portion of the cylinder 41. The rotational frequency of the screw 43 is detected by, for example, an encoder 45a of the plasticizing motor 45.

In the plasticizing process, in order to prohibit the rapid retraction of the screw 43, a set back pressure may be applied to the screw 43 by driving the injection motor 46. The back pressure against the screw 43 is detected by, for example, the pressure detector 47. If the screw 43 retracts to a predetermined position and a predetermined amount of molding material is accumulated in front of the screw 43, the plasticizing process is ended.

In addition, the injection unit 40 of this embodiment is an inline screw type. However, the injection unit 40 may be a pre-plasticizing type or the like. In an injection unit of a pre-plasticizing type, a molding material melted in a plasticizing cylinder is fed into an injection cylinder and the molding material is then injected from the injection cylinder intoamoldunit. A screw is disposed in the plasticizing cylinder so as to be rotatable or so as to be rotatable and be able to advance and retract, and a plunger is disposed in the injection cylinder so as to be able to advance and retract. In this case, the plunger corresponds to an injection member stated in the claims and the injection cylinder corresponds to a cylinder stated in the claims.

The moving unit 60 advances and retracts the injection unit 40 with respect to the mold unit 30. Further, the moving unit 60 presses the nozzle 42 against the mold unit 30, thereby gene rating a nozzle contact pressure. The moving unit 60 includes a hydraulic pump 61, a motor 62, a hydraulic cylinder 63, a first relief valve 64, a second relief valve 65, a flushing valve 66, a first check valve 67, a second check valve 68, a tank 69, an electromagnetic switching valve 71, a first pressure detector 72, a second pressure detector 73, and the like.

The hydraulic pump 61 has a first port 61a and a second port 61b. The hydraulic pump 61 is a bidirectional rotatable pump and generates a hydraulic pressure by sucking a working fluid (for example, oil) from one of the first port 61a and the second port 61b and discharging the working fluid from the other by switching the rotation direction of the motor 62. In addition, the hydraulic pump 61 can also discharge the working fluid from either of the first port 61a and the second port 61b by sucking the working fluid from the tank 69.

The motor 62 activates the hydraulic pump 61. The motor 62 drives the hydraulic pump 61 in a rotation direction and with a rotating torque corresponding to a control signal from the controller 90. The motor 62 may be an electric motor and may also be an electric servo motor.

The hydraulic cylinder 63 has a cylinder main body 63a, a piston 63b, and a piston rod 63c. The cylinder main body 63a is fixed to the injection unit 40. The piston 63b partitions the inside of the cylinder main body 63a into a front chamber C1 as a first chamber and a rear chamber C2 as a second chamber. The piston rod 63c is fixed to the stationary platen 12. Since the piston rod 63c passes through the front chamber C1, the cross-sectional area of the front chamber C1 is smaller than the cross-sectional area of the rear chamber C2.

The front chamber C1 of the hydraulic cylinder 63 is connected to the first port 61a of the hydraulic pump 61 through a first flow path CD1. The working fluid discharged from the first port 61a is supplied to the front chamber C1 through the first flow path CD1, whereby the injection unit 40 is pushed forward. The injection unit 40 is advanced, whereby the nozzle 42 is pressed against the stationary mold 32. The front chamber C1 functions as a pressure chamber which generates the nozzle contact pressure of the nozzle 42 using the pressure of the working fluid which is supplied from the hydraulic pump 61.

On the other hand, the rear chamber C2 of the hydraulic cylinder 63 is connected to the second port 61b of the hydraulic pump 61 through a second flow path CD2. The working fluid discharged from the secondport 61b is supplied to the rear chamber C2 of the hydraulic cylinder 63 through the second flow path CD2, whereby the injection unit 40 is pushed backward. The injection unit 40 is retracted, whereby the nozzle 42 is separated from the stationary mold 32.

In a case where the pressure in the first flow path CD1 exceeds a setting value, the first relief valve 64 is opened, thereby returning an excess working fluid in the first flow path CD1 to the tank 69 and thus maintaining the pressure in the first flow path CD1 at a pressure less than or equal to the setting value.

In a case where the pressure in the second flow path CD2 exceeds a setting value, the second relief valve 65 is opened, thereby returning an excess working fluid in the second flow path CD2 to the tank 69 and thus maintaining the pressure in the second flow path CD2 at a pressure less than or equal to the setting value.

The flushing valve 66 is a valve which adjusts an excess or deficiency in the circulation amount of the working fluid due to a difference between the cross-sectional area of the front chamber C1 and the cross-sectional area of the rear chamber C2, and is configured with, for example, a three-position and four-port spool valve, as shown in Fig. 1.

In a case where the pressure in the first flow path CD1 is lower than the pressure in the tank 69, the first check valve 67 is opened, thereby supplying the working fluid from the tank 69 to the first flow path CD1.

In a case where the pressure in the second flow path CD2 is lower than the pressure in the tank 69, the second check valve 68 is opened, thereby supplying the working fluid from the tank 69 to the second flow path CD2.

The electromagnetic switching valve 71 is a control valve which controls the flow of the working fluid between the front chamber C1 of the hydraulic cylinder 63 and the first port 61a of the hydraulic pump 61. The electromagnetic switching valve 71 is provided in the middle of the first flow path CD1, for example, and controls the flow of the working fluid in the first flow path CD1.

The electromagnetic switching valve 71 is configured with, for example, a two-position and two-port spool valve, as shown in Fig. 1. In a case where the spool valve is at a first position (the position on the left side in Fig. 1), the flow in both directions between the front chamber C1 and the first port 61a is permitted. On the other hand, in a case where the spool valve is at a second position (the position on the right side in Fig. 1), the flow from the front chamber C1 to the first port 61a is prohibited. In this case, the flow from the first port 61a to the front chamber C1 is not prohibited. However, the flow may be prohibited.

The first pressure detector 72 detects the hydraulic pressure in the front chamber C1. Since the nozzle contact pressure is generated by the hydraulic pressure in the front chamber C1, the nozzle contact pressure can be detected by using the first pressure detector 72. The first pressure detector 72 is provided in the middle of the first flow path CD1, for example, and is provided at a position on the front chamber C1 side on the basis of the electromagnetic switching valve 71. The nozzle contact pressure can be detected regardless of the state of the electromagnetic switching valve 71.

The second pressure detector 73 is provided in the middle of the first flow path CD1 and provided at a position on the first port 61a side on the basis of the electromagnetic switching valve 71. The second pressure detector 73 detects the hydraulic pressure between the electromagnetic switching valve 71 and the first port 61a. In a case of being in a state where the electromagnetic switching valve 71 permits the flow in both directions between the first port 61a and the front chamber C1, the hydraulic pressure between the first port 61a and the electromagnetic switching valve 71 and the hydraulic pressure between the electromagnetic switching valve 71 and the front chamber C1 are the same. Accordingly, in the case of this state, the nozzle contact pressure can be detected by using the second pressure detector 73.

In a state where a detected value (an actual value) of the nozzle contact pressure is a setting value, the flow from the front chamber C1 to the first port 61a is restricted by the electromagnetic switching valve 71, whereby it is possible to maintain the actual value of the nozzle contact pressure at the setting value when the motor 62 is brought to be in a stop state or an idling state.

In addition, the moving unit 60 of this embodiment has the hydraulic pump 61 or the hydraulic cylinder 63 for the purpose of converting the rotation motion of the motor 62 into the linear motion of the injection unit 40. However, the moving unit 60 may have a ball screw mechanism or the like.

Further, in this embodiment, the nozzle contact pressure is detected by using a pressure detector which is provided in the middle of the first flow path CD1. However, the nozzle contact pressure may be detected by using a load cell or the like which is provided in the nozzle 42, for example. That is, a pressure detector which detects the nozzle contact pressure maybe provided in either of the moving unit 60 and the injection unit 40.

Next, the controller 90 will be described. The controller 90 has a central processing unit (CPU) 91 and a storage medium 92 such as a memory. The controller 90 controls the injection unit 40 and the moving unit 60 by executing a program stored in the storage medium 92 in the CPU 91.

The controller 90 performs a series of processes such as the filling process, the hold pressure process, and the cooling process, thereby manufacturing a molding product. The controller 90 repeatedly performs these series of processes, thereby performing a cycle operation to repeatedly manufacture a molding product. For the shortening of a molding cycle, a plasticizing process may be performed during the cooling process.

The controller 90 controls the moving unit 60 such that the nozzle contact pressure reaches a setting value, during at least the period from the start of the filling process to the end of the hold pressure process. During this time, the setting value of the nozzle contact pressure may be constant. However, the setting value may be variable and may also vary in a step-by-step manner, for example.

Incidentally, in a case where the setting value of the nozzle contact pressure is not sufficiently high, there is a case where the molding material leaks from between the nozzle 42 and the stationary mold 32. In a case where the molding material leaks, compensation for a leaked molding material is required. For this reason, in a case where the molding material leaks, the most advanced position of the screw 43 during the hold pressure process and the position of the screw 43 at the time of the completion of the hold pressure process are more advanced than in a case where the molding material does not leak.

Here, the most advanced position of the screw 43 during the hold pressure process is a position when the screw 43 is most advanced during the holdpressure process. Since the molding material is cooled and contracts during the holdpressure process, the screw 43 basically advances. Therefore, the most advanced position of the screw 43 during the hold pressure process and the position of the screw 43 at the time of the completion of the hold pressure process are often the same position.

In addition, the most advanced position of the screw 43 during the hold pressure process and the position of the screw 43 at the time of the completion of the hold pressure process may be different positions. A case where a setting value of hold pressure is changed in a step-by-step manner during the hold pressure process, or the like, can be given as an example.

The controller 90 monitors at least one position of the most advanced position of the screw 43 during the hold pressure process and the position of the screw 43 at the time of the completion of the hold pressure process and monitors variation between shots at the monitoring position. The controller 90 corresponds to a monitoring unit stated in the claims. In addition, the monitoring unit may be provided separately from the controller 90.

In a case where the molding material sometimes leaks from between the nozzle 42 and the stationary mold 32, or a case where it is easy for the molding material to leak with time, a range of variation (for example, a difference between the maximum value and the minimum value) between the shots at the monitoringposition becomes greater than or equal to a predetermined value. The monitoring position of the screw 43 may be expressed by a distance from a reference position (for example, an advance limit position) of the screw 43. As the predetermined value, a value which is determined by obtaining ranges of variation in a case where the molding material leaks from between the nozzle 42 and the stationary mold 32 and a case where the molding material does not leak, in advance by a test and stored in the storage medium 92 is used. Whether or not the setting value of the nozzle contact pressure is sufficiently high can be determined from whether or not a range of variation is greater than or equal to a predetermined value. Accordingly, it is possible to support the adjustment of the setting of the injection molding machine.

Here, the variation between shots may be a variation between multiple successive shots and may be a variation between multiple discrete shots. It is favorable if the number of shots which are used for the calculation of the variation is two or more, and the number of shots is not particularly limited.

The controller 90 performs a change of setting of the nozzle contact pressure, based on the variation. The change of setting may be either of an increase in setting value and a decrease in setting value.

For example, the controller 90 increases the setting value of the nozzle contact pressure in a case where the range of variation is greater than or equal to a predetermined value. In this way, it is possible to prevent the leakage of the molding material from between the nozzle 42 and the stationary mold 32. As an increase interval of the setting value of the nozzle contact pressure, a value which is obtained in advance by a test or the like and stored in the storage medium 92 may be used, and the increase interval may be determined according to the magnitude of the range of variation.

In addition, in a case where the setting value of the nozzle contact pressure is changed in a step-by-step manner during one shot, it is favorable if the controller 90 increases at least one of the setting values, and the controller 90 may not increase all the setting values. The setting value to be increased may be determined based on the result of estimation in which a stage at which the leakage of the molding material will occur is estimated from a temporal change or the like of the position of the screw 43, for example.

Further, in a case where the range of variation is greater than or equal to a predetermined value, the controller 90 may increase the setting value of the nozzle contact pressure and then perform the monitoring of the variation again. It is possible to confirm whether or not the leakage of the molding material is reduced by an increase in the setting value of the nozzle contact pressure. In a case where the range of variation is reduced by an increase in the setting value of the nozzle contact pressure, it can be estimated that the leakage of the molding material has been reduced. On the other hand, in a case where the range of variation does not change due to an increase in the setting value of the nozzle contact pressure, or a case where the range of variation increases, it can be estimated that the molding material is leaking from a gap (for example, a gap between the stationary mold 32 and the movable mold 33) other than the gap between the nozzle 42 and the stationary mold 32. In this case, the controller 90 may activate an output unit of an alarm and may interrupt the cycle operation.

Further, the controller 90 may repeatedly perform an increase in the setting value of the nozzle contact pressure and subsequent monitoring of the variation within a range of the predetermined number of repetitions until the range of variation becomes less than a predetermined value. In a case where the range of variation does not become less than a predetermined value even if an increase in the setting value is repeatedly performed, an operation of the output unit of the alarm, interruption of the cycle operation, or the like may be performed.

Further, a peak value of injection pressure in each shot which is used in the monitoring of the variation may be within a predetermined range. The injection pressure is detected by, for example, the pressure detector 47 or the like. The peak value of injection pressure falling within a certain range indicates that the molding conditions have been stabilized. For example, at the time of the start of the cycle operation, the temperature of the injection molding machine or the mold unit 30 has not been stabilized, and thus the peak value of injection pressure can vary. Data in a case where the peak value of injection pressure is outside of a predetermined range is not used in the monitoring, whereby it is possible to accurately detect the leakage of the molding material. As the predetermined range, a value which is obtained by, for example, a test or the like and stored in the storage medium 92 in advance may be used.

The embodiment of the injection molding machine has been described above. However, the present invention is not limited to the above-described embodiment, and various modifications and improvements can be made within the scope of the concept of the present invention stated in the appended claims.

For example, the controller 90 may reduce the setting value of the nozzle contact pressure in a case where the range of variation is less than a predetermined value. By reducing the nozzle contact pressure to the extent that the molding material does not leak from between the nozzle 42 and the stationary mold 32, it is possible to reduce a load which is applied to the mold unit 30 or the injection unit 40, and thus it is possible to protect the mold unit 30 or the injection unit 40.

Further, the controller 90 may reduce the setting value of the nozzle contact pressure and then perform the monitoring of the variation again, in a case where the range of variation is less than a predetermined value. After a reduction in the setting value of the nozzle contact pressure, it is possible to confirm the presence or absence of the leakage of the molding material from between the nozzle 42 and the stationary mold 32.

Further, the controller 90 may repeatedly perform a reduction in the setting value of the nozzle contact pressure and subsequent monitoring of the variation as long as the range of variation is less than a predetermined value. It is possible to reduce the nozzle contact pressure as much as possible to the extent that the molding material does not leak from between the nozzle 42 and the stationary mold 32.

Further, the controller 90 may perform either of an operation of the output unit of the alarm and the interruption of the cycle operation in a case where the range of variation is greater than or equal to a predetermined value. As the output unit of the alarm, for example, an image display device or an alarm such as buzzer can be used.

## Claims

1. An injection molding machine comprising:
an injection unit (40) which includes a nozzle (42) that is pressed against a mold unit (30) and injects a molding material into the mold unit (30), a cylinder (41) in which the nozzle (42) is provided at a front end portion, and an injection member (43) which can advance and retract in the cylinder (41);
a moving unit (60) which advances and retracts the injection unit (40) with respect to the mold unit (30) and generates a nozzle contact pressure which presses the nozzle (42) against the mold unit (30);
**characterized by**
a monitoring unit (90) which is adapted to monitor at least one position of a most advanced position of the injection member (43) during a hold pressure process and a position of the injection member (43) at the time of completion of the hold pressure process and to perform a change of setting of the nozzle contact pressure, based on variation between shots at the monitoring position.

2. The injection molding machine according to Claim 1, wherein the monitoring unit (90) is further adapted to increase a setting value of the nozzle contact pressure in a case where the range of variation is greater than or equal to a predetermined value.

3. The injection molding machine according to Claim 2, wherein the monitoring unit (90) is further adapted to increase the setting value of the nozzle contact pressure and then to perf ormmonitoring of the variation again.

4. The injection molding machine according to Claim 3, wherein the monitoring unit (90) is further adapted to repeatedly perform an increase in the setting value of the nozzle contact pressure and subsequent monitoring of the variation within a range of the predetermined number of repetitions until the range of variation becomes less than a predetermined value.

5. A method for operating an injection molding machine comprising:
an injection unit (40) which includes a nozzle (42) that is pressed against a mold unit (30) and injects a molding material into the mold unit (30), a cylinder (41) in which the nozzle (42) is provided at a front end portion, and an injection member (43) which can advance and retract in the cylinder (41);
a moving unit (60) which advances and retracts the injection unit (40) with respect to the mold unit (30) and generates a nozzle contact pressure which presses the nozzle (42) against the mold unit (30);
said method being **characterized by**
monitoring at least one position of a most advanced position of the injection member (43) during a hold pressure process and a position of the injection member (43) at the time of completion of the hold pressure process and by performing a change of setting of the nozzle contact pressure, based on variation between shots at the monitoring position.

6. The method according to Claim 5, wherein a peak value of injection pressure in each shot which is used in monitoring of the variation is within a predetermined range.

## Patentansprüche

1. Spritzgießmaschine, umfassend:
- eine Einspritzeinheit (40), die eine Düse (42) beinhaltet, die gegen eine Formeinheit (30) gedrückt wird und einen Gießwerkstoff in die Formeinheit (30) einspritzt, einen Zylinder (41), in dem die Düse (42) in einem vorderen Endabschnitt angeordnet ist, und ein Einspritzbauteil (43), das sich in dem Zylinder (41) nach vorne bewegen und zurückziehen kann;
- eine Bewegungseinheit (60), welche die Einspritzeinheit (40) gegenüber der Formeinheit (30) nach vorn bewegt und zurückzieht und einen Düsen-Kontaktdruck erzeugt, der die Düse (42) gegen die Formeinheit (30) drückt;
**gekennzeichnet durch**
eine Überwachungseinheit (90), die dafür ausgelegt ist, wenigstens eine Position von einer am meisten nach vorn bewegten Position des Einspritzbauteils (43) während eines Druckhaltevorgangs und von einer Position des Einspritzbauteils (43) zum Zeitpunkt der Vollendung des Druckhaltevorgangs zu überwachen und um basierend auf einer Veränderung zwischen den Schüssen an der Überwachungsposition eine Änderung der Einstellung des Düsen-Kontaktdrucks vorzunehmen.

2. Die Spritzgießmaschine nach Anspruch 1, worin die Überwachungseinheit (90) darüber hinaus dafür ausgelegt ist, einen Einstellungswert für den Düsen-Kontaktdruck in einem Fall zu erhöhen, in dem der Veränderungsbereich größer oder gleich einem vorbestimmten Wert ist.

3. Die Spritzgießmaschine nach Anspruch 2, worin die Überwachungseinheit (90) darüber hinaus dafür ausgelegt ist, den Einstellungswert für den Düsen-Kontaktdruck zu erhöhen, und dann eine erneute Überwachung der Veränderung durchzuführen.

4. Die Spritzgießmaschine nach Anspruch 3, worin die Überwachungseinheit (90) darüber hinaus dafür ausgelegt ist, wiederholt eine Erhöhung des Einstellungswertes für den Düsen-Kontaktdruck und eine anschließende Überwachung der Veränderung in einem Bereich einer vorbestimmten Anzahl von Wiederholungen durchzuführen, bis der Veränderungsbereich kleiner als ein vorbestimmter Wert wird.

5. Verfahren zum Betrieb einer Spritzgießmaschine, umfassend:
- eine Einspritzeinheit (40), die eine Düse (42) beinhaltet, die gegen eine Formeinheit (30) gedrückt wird und einen Gießwerkstoff in die Formeinheit (30) einspritzt, einen Zylinder (41) in dem die Düse (42) in einem vorderen Endabschnitt angeordnet ist, und ein Einspritzbauteil (43), das sich in dem Zylinder (41) nach vorn bewegen und zurückziehen kann;
- eine Bewegungseinheit (60), welche die Einspritzeinheit (40) gegenüber der Formeinheit (30) nach vorn bewegt und zurückzieht und einen Düsen-Kontaktdruck erzeugt, der die Düse (42) gegen die Formeinheit (30) drückt;
wobei das Verfahren **gekennzeichnet ist durch**
das Überwachen wenigstens einer Position von einer am meisten nach vorn bewegten Position des Einspritzbauteils (43) während eines Druckhaltevorgangs und von einer Position des Einspritzbauteils (43) zum Zeitpunkt der Vollendung des Druckhaltevorgangs und das Vornehmen einer Änderung der Einstellung des Düsen-Kontaktdrucks basierend auf einer Veränderung zwischen den Schüssen an der Überwachungsposition.

6. Das Verfahren nach Anspruch 5, worin ein Spitzenwert des Einspritzdrucks bei jedem Schuss, der zum Überwachen der Veränderung verwendet wird, in einem vorbestimmten Bereich liegt.

## Revendications

1. Machine de moulage par injection comprenant :
une unité d'injection (40) qui comprend une buse (42) qui est comprimée contre une unité de moule (30) et injecte un matériau de moulage dans l'unité de moule (30), un cylindre (41) dans lequel la buse (42) est prévue au niveau d'une partie d'extrémité avant et un élément d'injection (43) qui peut avancer et se rétracter dans le cylindre (41) ;
une unité de déplacement (60) qui fait avancer et rétracte l'unité d'injection (40) par rapport à l'unité de moule (30) et génère une pression de contact de buse qui comprime la buse (42) contre l'unité de moule (30) ;
**caractérisée par** :
une unité de surveillance (90) qui est adaptée pour surveiller au moins une position de la position la plus avancée de l'élément d'injection (43) pendant un processus de pression de maintien et une position de l'élément d'injection (43) au moment de l'achèvement du processus de pression de maintien et pour réaliser un changement de réglage de la pression de contact de buse, en fonction d'une variation entre les cycles dans la position de surveillance.

2. Machine de moulage par injection selon la revendication 1, dans laquelle l'unité de surveillance (90) est en outre adaptée pour augmenter une valeur de réglage de la pression de contact de buse dans le cas dans lequel la plage de variation est supérieure ou égale à une valeur prédéterminée.

3. Machine de moulage par injection selon la revendication 2, dans laquelle l'unité de surveillance (90) est en outre adaptée pour augmenter la valeur de réglage de la pression de contact de buse et pour réaliser ensuite à nouveau la surveillance de la variation.

4. Machine de moulage par injection selon la revendication 3, dans laquelle l'unité de surveillance (90) est en outre adaptée pour réaliser à plusieurs reprises, une augmentation de la valeur de réglage de la pression de contact de buse et ensuite surveiller la variation dans une plage d'un nombre prédéterminé de répétitions jusqu'à ce que la plage de variation devienne inférieure à une valeur prédéterminée.

5. Procédé pour actionner une machine de moulage par injection comprenant :
une unité d'injection (40) qui comprend une buse (42) qui est comprimée contre une unité de moule (30) et injecte un matériau de moulage dans l'unité de moule (30), un cylindre (41) dans lequel la buse (42) est prévue au niveau d'une partie d'extrémité avant, et un élément d'injection (43) qui peut avancer et se rétracter dans le cylindre (41) ;
une unité de déplacement (60) qui fait avancer et rétracte l'unité d'injection (40) par rapport à l'unité de moule (30) et génère une pression de contact de buse qui comprime la buse (42) contre l'unité de moule (30) ;
ledit procédé étant **caractérisé par** les étapes consistant à :
surveiller au moins une position de la position la plus avancée de l'élément d'injection (43) pendant un processus de pression de maintien et une position de l'élément d'injection (43) au moment de l'achèvement du processus de pression de maintien et réaliser un changement de réglage de pression de contact de buse, en fonction d'une variation entre les cycles dans la position de surveillance.

6. Procédé selon la revendication 5, dans lequel une valeur de pic de la pression d'injection à chaque cycle qui est utilisée pour surveiller la variation est dans une plage prédéterminée.
